# EUROPEAN PATENT SPECIFICATION

(11) **EP 0 392 646 B1**
(45) Date of publication and mention of the grant of the patent: **13.07.1994**
(21) Application number: 90300314.3
(22) Date of filing: 11.01.1990
(51) Int. Cl.: F16L 55/128, F28F 11/02, F16B 39/10

(54) **Plug retainers**
Festhaltemechanismus für Pfropfen
Mécanisme de retenue pour bouchons

(30) Priority: 13.04.1989 US 340114
(43) Date of publication of application: 17.10.1990
(73) Proprietor: THE BABCOCK & WILCOX COMPANY, New Orleans, Louisiana 70160 (US)
(72) Inventor: Klahn, Francis C., Huddleston, Virginia 24503 (US)
(74) Representative: Cotter, Ivan John

(56) References cited:
- EP-A- 0 270 973
- DE-A- 2 739 644
- US-A- 1 772 063
- US-A- 4 438 784

## Description

This invention relates to plug retainers and particulary to the use of plug retainers to retain tube plugs (such as, for instance, heat exchanger tube plugs).

In tube-type heat exchangers a primary coolant fluid flows through the tubes of the heat exchanger while a secondary coolant fluid flows around the outside and in contact with the tubes such that heat exchange takes place between the two fluids. A defective or corroded tube presents the possibility of a leak whereby the higher pressure primary coolant will exit the tube and mix with the secondary coolant. This results in reduced efficiency of the heat exchanger and also, in the case of a nuclear steam generator, radioactive contamination of the secondary coolant. The most cost effective solution to such a problem is to plug the defective or corroded heat exchange tube.

Several types of explosive and mechanical plugs are used in the industry. However, the present invention is aimed mainly (but not exclusively) at mechanical tube plugs such as that described in US Patent No. US-A-4 390 042. Some of these types of plugs have been found to be susceptible to Primary Water Stress Corrosion Cracking (PWSCC). This can be a result of the Inconel 600 material that is employed either not having a high enough temperature during final mill annealing and then not responding to thermal treatment, or the material not receiving the proper thermal treatment. This results in susceptibility to PWSCC at each end of the expanded region where a mandrel has been pulled into a tapered section of the plug to expand ribs into the tube wall, regions of high tensile stress. The resulting crack propagation may result in loss of the plug nose with primary-secondary leakage, assuming the tube has a through-wall defect, or in loss of the plug head which could become a loose part in the reactor coolant system. There is also the potential of a plug part ejecting up into a U-bend of the steam generator tubing. The solution to prevent such plugs from causing damage to the reactor coolant system is removal of the plugs or installing a retainer in the plug which serves the dual purpose of retaining the cracked plug in position and preventing substantial leakage of primary coolant through the defective plug into the defective heat exchange tube (plugging the plug). Due to the extra time and equipment required for plug removal and the fact that some attempts at plug removal have resulted in separation of threaded/open end of the plug from the plug body, installation of a retainer assembly into the existing plug appears to be the most efficient initial solution to the problem. The applicants are not aware of any prior art aimed at solution of the problem associated with this particular plug design since the problem has only recently been recognised.

Patent Specification US-A-4 438 784 discloses a stopper for an inspection hole for X-ray apparatus wherein a cylindrical outer component can be secured and welded into an inspection hole and is internally threaded to receive an inner component which is externally threaded. After screwing in the inner component it can be welded to the outer component, the weld being broken if it is desired to remove the inner component.

Patent Specification EP-A-270 973 discloses a plug shell which has a closed inner end and can be inserted in a hole to be plugged and then expanded by engaging a hydraulic expander within the shell radially to expand the shell.

The invention comprises the use of a plug retainer with a tube plug, which tube plug has a shell with a conical inner surface and an open threaded end and a mandrel having threads on an inner surface and provided within the tube plug to engage the conical inner surface thereof,
wherein the plug retainer comprises:
a locking cup having a longitudinal bore therethrough and an externally threaded lower portion sized whereby the locking cup may be threadably installed in the open threaded end of the tube plug; and
a cap screw having a threaded shank sized to fit through the bore in the locking cup whereby the shank may be threadably engaged with the threads of the mandrel in the tube plug;
wherein the locking cup is provided with sealing means between the locking cup and the tube plug and the cap screw is provided with sealing means between the cap screw and the locking cup;
wherein the cap screw is provided with head flutes whereby the locking cup may be crimped on the cap screw; and
wherein the locking cup and the cap screw engage the threads of a different pitch respectively in the open threaded end and in the mandrel of the tube plug.

A preferred embodiment of the invention described in detail below solves the aforementioned problem in a straightforward manner. It provides a plug retainer which captures a head of the plug and also acts as a leak limiting plug if the inboard end of the plug should fail due to PWSCC. The plug retainer is a two part plug retainer formed from the locking cup which threads into the existing plug head and the cap screw which threads into the mandrel of the existing plug.

The invention will now be further described, by way of illustrative and non-limiting example, with reference to the accompanying drawings, in which like parts are designated by like reference numerals throughout, and in which
Fig. 1 is a cutaway view of a plug retainer according to a preferred embodiment of the invention as it appears installed;
Fig. 2 is a view of a cap screw of the plug retainer; and
Fig. 3 is a view of a locking cup of the plug retainer.

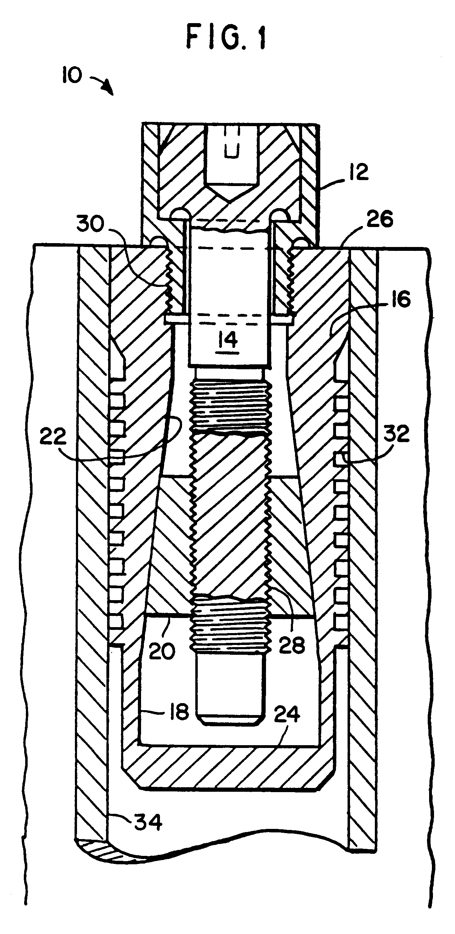

Fig. 1 shows a plug retainer 10 that comprises a locking cup 12 and a cap screw 14. The plug retainer 10 is designed to be used in a tube plug 16 which comprises a shell 18 and a mandrel 20. The shell 18 has a conical inner surface 22 which has a larger diameter at a closed end 24 and a smaller diameter near an open end 26. The conical inner surface 22 is arranged such that the mandrel 20 is captured within the shell 18 so that movement of the mandrel 20 towards the open end 26 causes the shell 18 to expand outwardly without allowing the mandrel 20 to be removed therefrom. Threads 28 on the inner surface of the mandrel 20 and threads 30 near the open end 26 are provided for ease of attachment of installation and removal tools (not shown). Upon expansion of the shell 18, ribs 32 on the outer edge of the shell 18 are forced into gripping contact with the interior of a heat exchange tube 34.

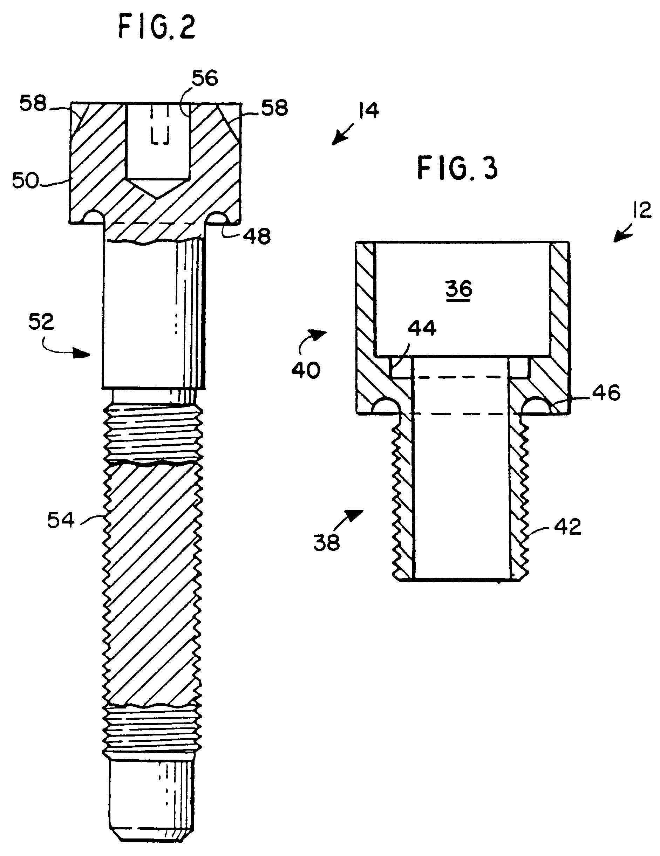

The locking cup 12, as best seen in Fig. 3, is provided with a longitudinal bore 36 therethrough to receive the cap screw 14. A lower portion 38 of the locking cup 12 is of lesser internal and external diameter than an upper portion 40 thereof. The bore 36 has a smaller diameter through the lower portion 38 for a reason that will be explained below. The lower portion 38 is provided with external threads 42 which are sized to allow the locking cup 12 to be threadably installed in the tube plug 16. The threads 42 may be provided with an integral thread flute to help clear any debris that may be present in the threads 30 of the tube plug 16. For ease of installation, a slot 44 is provided in the bottom of the upper portion 40. This permits installation with a screwdriver or similar tool to apply the proper torque to achieve sealing of the locking cup 12 to the surface of the tube plug 16.

Sealing means to ensure proper sealing of the locking cup 12 to the surface of tube plug 16 is provided in the form of a first integral compression ring 46 on the upper portion 40 at the junction of the lower portion 38 and the upper portion 40. Similar sealing means to ensure proper sealing of the cap screw 14 to the locking cup 12 is provided in the form of a second integral compression ring 48 on a head 50 of the cap screw at the junction of the head 50 and a shank 52 of the cap screw.

The cap screw 14, as best seen in Fig. 2, has its shank 52 sized to fit through the lower portion 38 of the locking cup 12. The head 50 is of a larger diameter than the shank 52 and is sized to fit within the upper portion 40, but not within the lower portion 38, of the locking cup 12. The shank 52 is provided with threads 54 which are sized to allow threading of the cap screw 14 through the mandrel 20. As in the locking cup 12, the threads 54 may be provided with an integral thread flute to help clear any debris that may be present in the threads 28 of the mandrel 20. The head 50 is provided with drive means in the form of a drive socket 56 which may be sized to allow use of known drive means, such as a 6.35mm (0.25 inch) drive tool, for installation. Means for preventing accidental separation of the locking cup 12 and cap screw 14 after installation is provided in the form of head flutes 58. This allows crimping of the upper portion 40 of the locking cup 12 onto the head 50.

In operation, the locking cup 12 is first threaded into the head of the tube plug 16 and torqued to a predetermined value, which ensures leak limiting performance while remaining within ASME Code allowable limits. The cap screw 14 is then inserted through the locking cup 12, threaded into the mandrel 20 and torqued to a similar predetermined value. Sealing is provided by the compression rings 46, 48. Installation may be conducted either in a manual or robotic mode. The locking cup 12 and cap screw 14 are fabricated from high mill annealed Alloy 600 material in accordance with ASME SB-166 and thermally treated at 718^{o}C (1325^{o}F) for 10 hours to remove residual machining stresses and cause the material to have a microstructure proven to be resistant to PWSCC. Test results have shown that the plug retainer 10 provides a leak limiting seal with leakage of less than 0.0001 g/m at a pressure differential of 30.34 MPa (4,400 lbf/in²) and a temperature of 343^{o}C (650^{o}F). Such test results indicate that the plug retainer 10 can meet both operating and faulted design loads. The plug retainer 10 fits within the existing inside diameter of the heat exchange tube 34 and can accommodate either a recessed plug or a plug that is protruding below the face of a tubesheet of the heat exchanger. Calculations indicate that any coolant which may be trapped in the tube plug 16 should not provide sufficient energy to eject the closed end 24 with adequate velocity to penetrate the wall of the heat exchange tube 34. The plug retainer 10 is capable of lasting for the expected design life of the steam generator when installed and is also capable of being removed, without damage to the tube plug 16 or the heat exchange tube 34, by uncrimping the locking cup 12 if there is a desire to remove the tube plug 16 at a later date. There is also very little possibility of separation of the plug retainer 10 as a unit from the tube plug 16 since the threads 28, 30 are each of a different pitch.

## Claims

1. The use of a plug retainer (10) with a tube plug (16), which tube plug (16) has a shell (18) with a conical inner surface (22) and an open threaded end (26) and a mandrel (20) having threads (28) on an inner surface and provided within the tube plug to engage the conical inner surface (22) thereof,
wherein the plug retainer (10) comprises:
a locking cup (12) having a longitudinal bore (36) therethrough and an externally threaded lower portion (38) sized whereby the locking cup may be threadably installed in the open threaded end (26) of the tube plug (16); and
a cap screw (14) having a threaded shank (52) sized to fit through the bore (36) in the locking cup (12) whereby the shank (52) may be threadably engaged with the threads (28) of the mandrel (20) in the tube plug (16);
wherein the locking cup (12) is provided with sealing means (46) between the locking cup (12) and the tube plug (16) and the cap screw (14) is provided with sealing means (48) between the cap screw (14) and the locking cup (12);
wherein the cap screw (14) is provided with head flutes (58) whereby the locking cup (12) may be crimped on the cap screw (14); and
wherein the locking cup (12) and the cap screw (14) engage the threads (30, 28) of a different pitch respectively in the open threaded end (26) and in the mandrel (20) of the tube plug (16).

2. The use of a plug retainer according to claim 1, wherein the cap screw (14) is provided with a drive socket (56).

## Patentansprüche

1. Verwendung eines Stopfenhalters (10) mit einem Rohrstopfen (16), welcher eine Hülse (18) mit einer konischen Innenfläche (22) und ein offenes, mit Gewinde versehenes Ende (26) hat, und mit einem Dorn (20), der ein Gewinde (28) an einer Innenfläche hat und in dem Rohrstopfen vorgesehen ist, um mit der konischen Fläche (22) desselben in Eingriff zu treten,
wobei der Stopfenhalter (10) aufweist:
eine Verschlußmanschette (12), die eine Längsbohrung (36) und einen unteren Abschnitt (38) mit Außengewinde hat, das so bemessen ist, daß die Verschlußmanschette in das offene Gewindeende (26) des Rohrstopfens (16) eingeschraubt werden kann, und
eine Kopfschraube (14) mit einem Gewindeschaft (52), der so bemessen ist, daß er durch die Bohrung (36) in der Verschlußmanschette (12) paßt, wobei der Schaff (52) in Schraubeingriff mit dem Gewinde (28) des Dornes (20) in dem Rohrstopfen (16) gebracht werden kann,
wobei die Verschlußmanschette (12) mit Dichtungseinrichtungen (46) zwischen der Verschlußmanschette (12) und dem Rohrstopfen (16), und die Kopfschraube (14) mit Dichtungseinrichtungen (48) zwischen der Kopfschraube (14) und der Verschlußmanschette (12) versehen ist,
die Kopfschraube (14) mit Kopfauskehlungen (58) versehen ist, wodurch die Verschlußmanschette (12) auf die Kopfschraube (14) gecrimpt werden kann, und
wobei die Verschlußmanschette (12) und die Kopfschraube (14) jeweils in die Gewinde (30, 28) mit unterschiedlicher Gewindesteigung in dem offenen Gewindeende (26) bzw. in dem Dorn (20) des Rohrstopfens (16) eingreifen.

2. Verwendung eines Stopfenhalters nach Anspruch 1, wobei die Kopfschraube (14) mit einer Antriebshülse (56) versehen ist.

## Revendications

1. Utilisation d'un mécanisme de retenue (10) avec un bouchon de tube (16), lequel bouchon de tube (16) comporte une enveloppe (18) avec une surface interne conique (22) et une extrémité taraudée ouverte (26) et un mandrin (20) comportant un taraudage (28) sur une surface interne et disposé au sein du bouchon de tube pour engager sa surface interne conique (22),
dans lequel le mécanisme de retenue de bouchon (10) comprend :
une coupelle de verrouillage (12) comportant un alésage longitudinal (36) en son sein et une portion inférieure filetée extérieurement (38) dimensionnée de manière que la coupelle de verrouillage puisse être installée par vissage dans l'extrémité taraudée ouverte (26) du bouchon de tube (16); et
un boulon à tête (14) comportant une tige filetée (52) dimensionnée de manière à s'emboîter dans l'alésage (36) dans la coupelle de verrouillage (12) de manière que la tige (52) puisse être engagée par vissage avec le taraudage (28) du mandrin dans le bouchon de tube (16);
dans lequel la coupelle de verrouillage (12) est dotée d'un moyen d'étanchéité (46) entre la coupelle de verrouillage (12) et le bouchon de tube (16) et le boulon à tête (14) est doté d'un moyen d'étanchéité (48) entre le boulon à tête (14) et la coupelle de verrouillage (12);
dans lequel le boulon à tête (14) est doté de chanfreins de tête (58) de manière que la coupelle de verrouillage (12) puisse être sertie sur le boulon à tête (14); et
dans lequel la coupelle de verrouillage (12) et le boulon à tête (14) engagent les taraudages (30, 28) d'un pas de vis différent respectivement dans l'extrémité taraudée ouverte (26) et dans le mandrin (20) du bouchon de tube (16).

2. Utilisation d'un mécanisme de retenue selon la revendication 1, dans laquelle le boulon à tête (14) est doté d'une douille d'entraînement (56).
